# NEUE EUROPÄISCHE PATENTSCHRIFT

(11) **EP 2 106 337 B2**
(45) Veröffentlichungstag und Bekanntmachung des Hinweises auf die Entscheidung über den Einspruch: **01.06.2016**
(45) Hinweis auf die Patenterteilung: 11.01.2012
(21) Anmeldenummer: 08758741.6
(22) Anmeldetag: 23.05.2008
(51) Int. Cl.: B29C 67/00

(54) **VERFAHREN ZUM SCHICHTWEISEN HERSTELLEN EINES DREIDIMENSIONALEN OBJEKTS**
METHOD FOR THE LAYERED PRODUCTION OF A THREE-DIMENSIONAL OBJECT
PROCÉDÉ DE FABRICATION PAR COUCHES D'UN OBJET TRIDIMENSIONNEL

(30) Priorität: 25.05.2007 DE 102007024469
(43) Veröffentlichungstag der Anmeldung: 07.10.2009
(73) Patentinhaber: EOS GmbH Electro Optical Systems, 82152 Krailling (DE)
(72) Erfinder: MÜLLER, Frank, 82256 Fürstenfeldbruck (DE); PFISTER, Andreas, 81475 München (DE); LEUTERER, Martin, 82140 Olching (DE); KELLER, Peter, 82152 Krailling (DE)
(74) Vertreter: Prüfer & Partner mbB Patentanwälte · Rechtsanwälte
(86) Internationale Anmeldenummer: PCT/EP2008/004149
(87) Internationale Veröffentlichungsnummer: WO 2008/145316

(56) Entgegenhaltungen:
- WO-A-97/43696
- DE-A1- 4 412 160
- DE-A1- 19 606 128
- DE-A1-102005 048 314
- DE-A1-102005 054 723
- US-A- 4 945 032
- US-A- 6 107 008

## Beschreibung

Die vorliegende Erfindung betrifft ein Verfahren zum Herstellen eines dreidimensionalen Objektes mittels eines Rapid Prototyping-Verfahren. Insbesondere betrifft sie ein Verfahren, bei dem schichtweise ein pulverförmiges Material auf eine Unterlage aufgebracht wird und selektiv an jenen Stellen verfestigt wird, die dem Querschnitt eines schichtweise zu bildenden Objektes entsprechen.

Als Rapid Prototyping-Verfahren werden Verfahren bezeichnet, mit denen eine schnelle Herstellung von Musterbauteilen ausgehend von Konstruktionsdaten möglich ist. Das herzustellende Bauteil wird dabei in der Regel schichtweise aus einem formlosen oder formneutralen Material aufgebaut. Beispielsweise beschreibt US 5,730,925 ein Verfahren, bei dem Schichten eines Pulvers auf einen höhenverfahrbaren Träger aufgetragen werden und selektiv an den dem Querschnitt des herzustellenden Objektes entsprechenden Stellen mittels eines Lasers versintert werden.

DE 44 12 160 A1 beschreibt ein Belichtungsverfahren zum Reduzieren der Verzerrung beim Herstellen von Objekten mittels Stereolithografie. Insbesondere wird eine photo-härtbare Polymerschicht einer zweimaligen Belichtung ausgesetzt, wobei das erste Belichten ein bildmoduliertes Belichten zum Erzeugen einer Reihe von isolierten, verankerten Inseln ist und das zweite Belichten ebenfalls eine bildmodulierte Belichtung ist, die die Inseln zu einem durchgehenden festen Bild verbindet.

DE 196 06 128 A1 beschreibt eine Vorrichtung und ein Verfahren zum Herstellen eines Objekts mittels Lasersinterns. Um eine möglichst homogene Dichteverteilung in dem zu bildenden Objektzu erzielen, wird die Geschwindigkeit mit der der Belichtungsstrahl geführt wird in Abhängigkeit von der Länge von Linien eines linienförmigen Bestrahlungsmusters variiert.

US 4,945,032 beschreibt ein Stereolithografieverfahren, bei dem nach einer ersten Belichtung eine Pause eingelegt wird, damit sich ein in dem photo-härtbaren Material vorhandener Photoinitiator von der Belichtungsoberfläche entfernen kann. Dadurch wird beim Aushärten eine geringere Aushärttiefe erreicht.

DE 10 2005 054 723 A1 beschreibt die Verwendung eines Polyesterpulvers in einem formgebenden Verfahren. Hierbei wird darauf verwiesen, dass die selektive Belichtung durch Masken, die Auftragung von Inhibitoren, Absorbern oder Suszeptoren oder durch die Fokussierung des Energieeintrags erreicht werden kann.

WO 97/43696 A1 beschreibt Verfahren zum Erhöhen der Belichtungsempfindlichkeit von photo-härtbaren Polymermatrizen. Hierbei werden die photo-härtbaren Polymermaterialien einer Vorbelichtung ausgesetzt.

US 6,107,008 beschreibt ein Verfahren, bei dem mittels Stereolithografie erzeugte Objekte einer Nachhärtung mittels Elektronenstrahlen unterzogen werden.

US 6,217,816 B1 beschreibt eine Vorrichtung gemäß dem Oberbegriff des Anspruchs 11 und ein Verfahren zum Erzeugen von keramischen Prototypen. Hierbei wird eine Mischung aus einem anorganischen Bindemittel, einem Lösungsmittel und einem Keramikpulver als Schicht auf eine Oberfläche aufgetragen und mittels eines Lasers partiell verfestigt. Zur Unterstützung wird die Schicht vor dem Verfestigen mittels Laser durch einen Infrarotstrahler vorgeheizt.

US 5,640,667 beschreibt eine vorrichtung gemäß dem Oberbegriff des Anspruchs 13 und die Herstellung von Metallteilen mittels heißisostatischem Pressen. Hierbei werden das Bauteil und der Behälter durch Lasersintern hergestellt, wobei der den Behälter ausbildende Rand eines Belichtungsquerschnitts mit erhöhter Laserleistung oder verringerter Abtastgeschwindigkeit belichtet wird, so dass seine Dichte erhöht ist.

DE 198 18 469 A1 beschreibt ein Verfahren zur Herstellung eines geschichteten Gegenstands, wobei ein Randabschnitt des Gegenstands mit einem laserstrahlverringerten Durchmesser belichtet wird und ein innerer Abschnitt mit einem Laserstrahl eines im Vergleich zum Randabschnitt größeren Durchmessers belichtet wird.

US 2004/0094728 A1 beschreibt eine Lasersintervorrichtung, bei der ein über dem Baufeld angeordneter Scanner in der Ebene bewegbar ist, um einen größeren Bereich mit der Laserstrahlung beim Verfestigen abdecken zu können. Insbesondere können dem Scanner auch die Strahlen zweier Laser zugeführt werden.

DE 199 53 000 A1 beschreibt ein Verfahren zur schnellen Herstellung von Körpern, bei dem mehrere Laserstrahlen verwendet werden. Hierdurch soll eine schnellere Verfestigung einer Schicht erzielt werden.

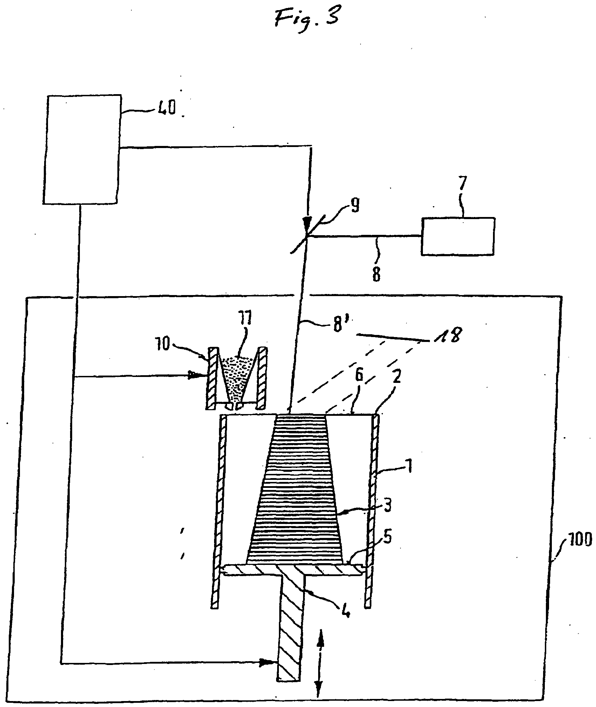

Fig. 3 zeigt beispielhaft eine derartige Lasersintervorrichtung. Wie aus Fig. 3 ersichtlich ist, weist die Vorrichtung einen Behälter 1 auf, der den Bauraum begrenzt. Dieser ist nach oben offen und nach unten durch einen Träger 4 zum Tragen eines zu bildenden Objektes 3 begrenzt. Durch den oberen Rand 2 des Behälters (bzw. seine Seitenwände) wird eine Arbeitsebene 6 definiert. Das zu bildende Objekt befindet sich auf der Oberseite des Trägers 4 und wird aus einer Mehrzahl sich parallel zu der Oberseite des Trägers 4 erstreckender Schicht aus einem mittels Strahlung verfestigbaren, pulverförmigen Aufbaumaterial gebildet. DerTräger ist dabei über eine Höheneinstellvorrichtung in vertikaler Richtung, d.h. parallel zu der Seitenwand des Behälters 1 verschiebbar. Damit kann die Position des Trägers 4 relativ zur Arbeitsebene 6 eingestellt werden.

Oberhalb des Behälters 1 bzw. der Arbeitsebene 6 ist eine Aufbringvorrichtung 10 zum Aufbringen des zu verfestigenden Pulvermaterials 11 auf die Trägeroberfläche 5 oder eine zuletzt verfestigte Schichtvorgesehen. Weiterhin ist oberhalb der Arbeitsebene 6 eine Bestrahlungseinrichtung in Form eines Lasers 7 angeordnet, die einen gerichteten Lichtstrahl 8 abgibt. Dieser wird über eine Ablenkeinrichtung 9, beispielsweise einen Drehspiegel, als abgelenkter Strahl 8' in Richtung der Arbeitsebene 6 gelenkt.

Zur Herstellung eines dreidimensionalen Objektes 3 wird zunächst der Träger 4 mittels der Höheneinstellvorrichtung in die höchste Stellung gefahren, in derdie Oberfläche des Trägers 4 in einem Abstand, welcher der Schichtdicke der ersten aufzubringenden Schicht entspricht, unterhalb des oberen Randes 2 liegt. Dann wird die Aufbringvorrichtung 10 über die Arbeitsebene verfahren. Dabei tritt das Pulver aus und bildet. die erste Schicht auf der Trägeroberfläche. Anschließend wird der Laser 7 über die Ablenkvorrichtung 9 derart gesteuert, dass der abgelenkte Lichtstrahl nacheinander an allen gewünschten, also in dieser Schicht dem Objekt entsprechenden Stellen, auftrifft und dort das Pulvermaterial durch Sintern verfestigt.

In einem zweiten Schritt wird der Träger um den Betrag der Dicke der nächsten Schicht abgesenkt und wiederum eine Pulverschicht aufgetragen, woraufhin der Schritt des Bestrahlens an den dem Querschnitt des Objektes in dieser Schicht entsprechenden Stellen wiederholt wird. Die Schritte werden sooft wiederholt, bis das Objekt fertig gestellt ist.

Bei der eben beschriebenen Herstellung eines dreidimensionalen Objektes muss die Temperatur des Materials innerhalb eines bestimmten Prozessfensters liegen, um eine gute Qualität des dreidimensionalen Objektes sicherzustellen. Aus diesem Grunde wird deshalb normalerweise eine mittels des Lasers zu verfestigende Pulverschicht durch eine Strahlungsheizung 18 derart vorgeheizt, dass die mittlere Temperatur der Schicht innerhalb des Prozessfensters liegt. Als Heizstrahler 18 werden dabei bevorzugt Infrarotstrahler verwendet.

Obwohl sich das oben beschriebene Verfahren bewährt hat zur Herstellung von formgenauen Teilen in kleiner Serie (Prototypenbau) so kann es dennoch in einigen Punkten noch verbessert werden:
- Da die Verfestigung des Pulvermaterials punktweise erfolgt, muss jede durch den Laser zu verfestigende Stelle einzeln angefahren werden, was zeitaufwendig ist.
- Zum Verfestigen des Materials mittels Lasers muss ein Laser verwendet werden, welcher genügend Energie liefern kann, um das Material zumindest teilweise aufzuschmelzen. In der Regel ist solch ein Laser, beispielsweise ein CO₂-Laser, kostspielig in der Anschaffung und Wartung. Des weiteren führt die hohe Energiemenge, die der Laser abgibt, dazu, dass eine Kühlung angebrachtwerden muss, welche nicht nurden Laserselbst, sondern beispielsweise auch ein als Ablenkvorrichtung verwendetes Spiegelsystem kühlt. Dies macht das ganze System träger und führt darüber hinaus zu einem langsameren Belichtungsvorgang aufgrund der großen zu bewegenden Massen.

Zur Beschleunigung des Herstellungsverfahrens wird in der WO 2005/011959 A1 vorgeschlagen, auf eine selektiv zu verfestigende Schicht stellenweise absorptionserhöhende oder-senkende Stoffe aufzubringen und anschließend eine Bestrahlung mittels einer flächenhaften Heizung durchzuführen. Durch die Unterschiede im Absorptionsverhalten ist es dann möglich, eine selektive Versinterung des Materials in der Schicht zu erreichen. Allerdings wird der Zeitgewinn durch das großflächige Bestrahlen erkauft durch zeitliche Verluste infolge des Aufbringens einer zusätzlichen Schicht von Absorberstoffen. Desweiteren können mittels des Aufbringens der Absorberstoffe nicht beliebig kleine Materialgeometrien realisiert werden.

Um eine Lasersintervorrichtung kostengünstiger zu gestalten, schlägt die DE 10 2004 012 682 A1 vor, auf eine zu verfestigende Schicht Absorberselektiv aufzubringen; welche mittels Laserlicht einer Wellenlänge zwischen 100 und 3000 nm erwärmt werden können und ihre Wärmeenergie an die darunter liegende Schicht abgeben, in der ein Sintervorgang stattfindet. Durch die Absorption bei kürzeren Wellenlängen ist die Verwendung von kostengünstigeren Lasern möglich. Allerdings wird wiederum zusätzliche Zeit zum Auftragen des Absorbers benötigt und darüber hinaus in DE 10 2004 012 682 A1 sogar vorgeschlagen, den Absorberpunktweise mit einem Laser zu bestrahlen, was gegenüber einem herkömmlichen Lasersinterverfahren keinen deutlichen Zeitgewinn bringt.

Angesichts der oben geschilderten Probleme ist es eine Aufgabe der vorliegenden Erfindung, ein Verfahren zur schichtweisen Herstellung eines dreidimensionalen Objektes bereitzustellen, welches schnell, genau und kostengünstig ist.

Die Aufgabe wird gelöst durch ein Verfahren gemäß Anspruch 1 oder 2 und eine Vorrichtung gemäß Anspruch 11 oder 13.

Weiterbildungen der Erfindungen sind in den Unteransprüchen angegeben.

Gemäß der vorliegenden Erfindung erfolgt die Verfestigung des Baumaterials ganz oder teilweise mittels großflächigen Einbringens von elektromagnetischer Strahlung, beispielsweise über eine Strahlungsheizung. Um zu erreichen, dass dennoch eine selektive Verfestigung des Materials lediglich an den Stellen stattfindet, die dem Querschnitt des zu bildenden Objektes entsprechen, wird vor dem großflächigen Bestrahlen selektiv das Absorptionsvermögen des Materials in der Schicht verändert. Dies geschieht durch Richten eines fokussierten Photonen- oder Teilchenstrahls, beispielsweise eines Laserstrahls, auf ausgewählte Stellen der Schicht.

Da durch die großflächige Bestrahlung das Material an allen Stellen des Bauteilquerschnitts gleichzeitig aufgeschmolzen wird, wird die Bauzeit gegenüber dem Stand der Technik verkürzt.

Da beim vorliegenden Verfahren nicht so viel Energie durch den Photonen - und/oder Teilchenstrahl in die Schicht eingebracht werden muss, dass eine vollständige Aufschmelzung des Pulvers eintritt, kann das Abtasten der Schicht mittels des Photonen- oderTeilchenstrahls schneller geschehen, da die Bestrahlungsdauer verringert ist. Hinzu kommt, dass die Anforderungen an die Kühlung aufgrund der niedrigeren benötigten Strahlenergie herabgesetzt werden. Dadurch wird die gesamte Scanner-Vorrichtung leichter und beweglicher, was ebenfalls die Zeitdauer für das Abtasten der Schicht mittels des Strahls verkürzt.

Da die Versinterung nicht allein über die vom Laser eingebrachte Energie erreicht werden muss, können auch Laser verwendet werden, deren Wellenlängen nicht im Infraroten liegen. Diese lassen sich bei niedrigerer Wellenlänge genauer fokussieren, wodurch kleinere Strukturen an dem Bauteil realisiert werden können.

Verwendet man bei dem vorliegenden Verfahren einen energiereichen IR-Laser (z.B. einen CO2-Laser), so wird es möglich, Baumaterialien (wie z.B. Polyaryletherketone) zu verwenden, bei denen aufgrund ihres hohen Schmelzpunktes und ihrer hohen Schmelzviskosität eine vollständige Aufschmelzung allein mittels eines Laserstrahls schwierig ist. Durch die flankierende selektive Aufschmelzung mitteis einer Strahlungsheizung (Nachversinterung) lassen sich die Bauteileigenschaften gegenüber einem herkömmlichen Verfahren verbessern.

Schließlich lassen sich mit dem erfindungsgemäßen Verfahren homogenere Bauteile realisieren, da durch das großflächige Aufschmelzen lokale Unterschiede in den Bauteileigenschaften wie z.B. der Dichte, die bei punktweiser Verfestigung auftreten können, ausgeglichen werden.

Weitere Merkmale und Zweckmäßigkeiten der Erfindung ergeben sich aus der nachfolgenden Beschreibung von Ausführungsbeispielen unter Zuhilfenahme der Zeichnungen. Von den Figuren zeigen:
- Fig. 1: eine lichtmikroskopische Aufnahme der Bruchfläche eines aus dem Material PEEK gefertigten Bauteils, bei dem die Nachversinterungszeit 12 Sekunden betrug.
- Fig. 2: eine lichtmikroskopische Aufnahme der Bruchfläche eines aus dem Material PEEK gefertigten Bauteils ohne Nachversinterungszeit.
- Fig. 3: eine Lasersintervorrichtung zur schichtweisen Herstellung eines dreidimensionalen Objektes.

### 1. Ausführungsbeispiel

Bei dem ersten Ausführungsbeispiel der Erfindung wird die Tatsache ausgenutzt, dass sich Pulvermaterial infolge der Einwirkung von elektromagnetischer Strahlung oderTeilchenstrahlung verfärben kann. Da dies zunächst an thermoplastischen Polymeren beobachtet wurde, wird bei dem ersten Ausführungsbeispiel beispielhaft Polyamid66-Pulver als Baumaterial verwendet, welches nicht thermisch stabilisiert wurde. Geeignet sind aber ebenso alle anderen Thermoplaste und Thermoelaste wie z.B. Polyethylen (PE, HDPE, LDPE), Polypropylen (PP), Polyamide, Polyester, Polyesterester, Polyetherester, Polyphenylenether, Polyacetale, Polyalkylenterephthalate, insbesondere Polyethylenterephthalat (PET) und Polybutylenterephthalat (PBT), Polymethylmethacrylat (PMMA), Polyvinylacetal, Polyvinylchlorid (PVC), Polyphenylenoxid (PPO), Polyoxymethylen (POM), Polystyrol (PS), Acrylnitril-Butadien-Styrol (ABS), Polycarbonate (PC), Polyethersulfone, thermoplastische Polyurethane (TPU), Polyaryletherketone, insbesondere Polyetheretherketon (PEEK), Polyetherketonketon (PEKK), Polyetherketon (PEK), Polyetheretherketonketon (PEEKK), Polyaryletheretheretherketon (PEEEK) oder Polyetherketonetherketonketon (PEKEKK), Polyetherimide (PEI), Polyarylensulfide, insbesondere Polyphenylensulfid (PPS), thermoplastische Polyimide (PI), Polyamidimide (PAI), Polyvinylidenfluoride, sowie Copolymere dieser Thermoplaste wie z.B. ein Polyaryletherketon (PAEK) /Polyarylethersulfon (PAES) -Copolymer, Mischungen und/oder Polymerblends.

Das erfindungsgemäße Verfahren zum Herstellen von dreidimensionalen Objekten ist ähnlich jenem, wie es weiter oben in Zusammenhang mit der in Fig. 3 gezeigten Lasersintervorrichtung beschrieben wurde. Als Heizstrahler 18 wurden Quarzstrahlerverwendet, es eignen sichjedoch auch andere Bauformen der Strahlungsheizung. Die Leistung der Heizstrahler wurde so eingestellt, dass vor Beginn der Belichtung einer neu aufgetragenen Pulverschicht die Oberflächentemperatur der Pulverschicht bei 230°C lag. Als Laser wurde ein CO2-Laser verwendet, dessen Leistung 30 Watt und Einwirkdauer 0,2 ms (Scangeschwindigkeit 3000mm/s bei einem Fokusdurchmesser von 600µm) so gewählt wurden, dass die belichteten Stellen deutlich brauner als das unbelichtete Pulver waren. Nachdem alle dem Querschnitt des Objektes entsprechenden Stellen innerhalb der Pulverschichtbelichtet waren, wurde 30 Sekunden bis zum Auftragen der nächsten Pulverschicht gewartet. Während dieser Zeit (Nachversinterungszeit) war die soeben belichtete Pulverschicht der Wirkung der Strahlungsheizung ausgesetzt, deren Leistung nicht verändert wurde. An den belichteten Stellen war nach Ende der 30-sekündigen Wartezeit eine glänzende Schmelzeschicht erkennbar, die sich unter dem Einfluss der Strahlungsheizung gebildet hatte. Die soeben geschilderte Vorgehensweise für eine Pulverschicht wurde in gleicher Weise bei den übrigen Pulverschichten durchgeführt.

Der Unterschied zum Stand der Technik bei dem obigen Verfahren ist, dass nicht die Einwirkung des Lasers zu einem kompletten Aufschmelzen des Materials führte, sondern erst die Wirkung der Strahlungsheizung auf die belichteten Bereiche. Der Laser diente nur zur Auswahl der durch die Strahlungsheizung zu verfestigenden Bereiche. Durch deren Dunklerfärbung war ihr Absorptionsvermögen für die Wärmestrahlung der Strahlungsheizung erhöht. Durch diese Erhöhung der Absorption wurden die belichteten Stellen heißer als das nicht belichtete Pulver und schmolzen auf. Wie viel Wärme hierbei zunächst durch den Laser eingebracht wird und ob der Laser schon ein teilweises Aufschmelzen des Pulvers herbeiführt, ist einstellbar. Entscheidend für das Ergebnis ist die zusätzliche Absorption der Strahlerenergie.

Die einzige Anforderung an die eingebrachte Laserenergie ist daher die, dass der Energieeintrag eine Änderung des Absorptionsvermögens des Pulvermaterials herbeiführen muss. Da die hierfür benötigte Energiemenge deutlich unter jener für eine vollständige Verfestigung des Pulvers liegen kann, kann die Laser-Einwirkdauer gegenüber dem herkömmlichen Verfahren erniedrigt werden, was zu einer schnelleren Belichtung führt. Darüber hinaus kann auch die Laserleistung niedriger gewählt werden, was infolge der geringeren Anforderungen an die Kühlung, wie weiter oben geschildert, die Belichtungszeit ebenfalls verkürzt.

Desweiteren ist es möglich, Laser mit einer kürzeren Wellenlänge als jener des CO2-Lasers zu verwenden. Eine kürzere Wellenlänge wiederum bringt eine bessere Fokussierbarkeit mit sich, was eine bessere Detailauflösung bei dem Bauteil ermöglicht. Welche Wellenlänge des Laserlichts verwendbar ist, ist dabei abhängig von dem verwendeten Pulvermaterial. Zum einen muss das Absorptionsvermögen für das Laserlicht gut sein, zum anderen muss die Wellenlänge geeignetsein, Änderungen des Absorptionsverhaltens herbei zu führen. Abgesehen von diesen Randbedingungen ist eine beliebige Laser-Wellenlänge (beispielsweise zwischen 100 nm und 10600 nm) geeignet.

Eine Änderung der Färbung und damit des Absorptionsvermögens des Pulvers oder seiner Schmelze unter Einwirkung von elektromagnetischer Strahlung oder Teilchenstrahlung kann seine Ursache zum einen in chemischen Reaktionen haben, die durch die Strahlung angestoßen werden. An erster Stelle ist dabei eine mögliche Oxidation zu nennen. So betrug bei dem vorliegenden Ausführungsbeispiel der Restsauerstoffgehalt 3 %. Desweiteren kann eine Verfärbung aber auch durch Phasenübergänge (z.B. teilkristallin <-> amorph) bewirkt werden oder durch Vernetzungs- bzw. Agglomerationsvorgänge.

### 2. Ausführungsbeispiel

Zur Erhöhung der Änderung des Absorptionsverhaltens bei Zufuhr von elektromagnetischer Strahlung oder Teilchenstrahlung kann das verwendete Grundmaterial mit Zusatzstoffen vermischt werden. Diese können ihr Absorptionsverhalten so deutlich ändern, dass ebenfalls eine deutliche Änderung des Absorptionsverhaltens der Mischung erkennbar ist. Desweiteren kann über die gezielte Beifügung von Zusatzstoffen gezielt eine Empfindlichkeit für eine bestimmte Strahlung (beispielsweise solche einer bestimmten Wellenlänge) herbeigeführt werden. Die Empfindlichkeit kann dabei für den gerichteten Strahl zum punktuellen Belichten erhöht werden (beispielsweise für Laserlicht einer bestimmten Wellenlänge). Denkbar ist aber auch eine gezielte Erhöhung der Empfindlichkeit für die Strahlungsheizung. An Zusatzstoffen sind denkbar
- Alle gängigen Farbmittel (Farbstoffe und Pigmente) welche im UV-VIS und/oder im Infrarotbereich absorbieren
- Additive, welche speziell im Nahinfrarotbereich ihr Absorptionsmaximum besitzen: wie z.B. Lumogen IR765 und Lumogen IR788 der BASF AG, Schwarzpigmente wie z.B. Ruß, Graphit, Kohlefasern oder Carbon-Nanotubes, Halbleitermaterialien (vorzugsweise basierend auf Oxiden und Sulfiden wie z.B. Antimonoxid, Zinnoxid, Indiumoxid, Zinkoxid, Zinksulfid, Zinnsulfid oder deren Gemische) oder durch Halbleitermaterialien beschichtete Substrate (z.B. Glimmerplättchen, SiO₂-Plättchen, Al₂O₃,-Plättchen, Glasplättchen, Aluminiumplättchen, BiOCI-Plättchen, SiO₂-Kugeln, TiO₂-Kugeln, Polymerkugeln, Kieselgel, Kieselgur, Glaskugeln, Glashohlkugeln, TiO₂-Nadeln oder Gemische der Substrate)
- Die Zusatzstoffe können in Mengen von 0,01 - 30 Gew.% zugesetzt werden. Vorzugsweise von 0,1 - 10 Gew.%
- Die Partikelgröße der Pigmente beträgt von 0,01 - 150µm, vorzugsweise von 0,1 - 30µm
- Füllstoffe und Flammschutzmittel, welche vor allem im Nahinfrarotbereich streuen und absorbieren können.
- Verarbeitungshilfsmittel wie z.B. Schmiermittel, Stabilisatoren oder Nukleirungsmittel, welche das Absorptionsverhalten direkt oder indirekt durch Beeinflussung der Kristallinität verändern können.

Im zweiten Ausführungsbeispiel nutzt man aus, dass ein Zusatzstoff indirekt, infolge einer Phasenänderung des Grundmaterials, sein Absorptionsverhalten ändert. Hierzu wird als Baumaterial Polyamid 12 verwendet, welches mit Russpartikeln in einem Dryblend versetzt ist. Reines Polyamid 12 erscheint aufgrund der Reflexe an den vielen Kornoberflächen weiß. Die beigefügten Russpartikel befinden sich auf der Oberfläche der Körner, wodurch das Pulver grau erscheint.

Abgesehen davon, dass andere Parameter gewählt werden, ist das Verfahren gemäß dem zweiten Ausführungsbeispiel identisch zu jenem des ersten Ausführungsbeispiels. Als Heizstrahler 18 wurden Quarzstrahler verwendet, es eignen sich jedoch auch andere Bauformen der Strahlungsheizung. Die Leistung der Heizstrahler wurde so eingestellt, dass vor Beginn der Belichtung einer neu aufgetragenen Pulverschicht die Oberflächentemperatur der Pulverschicht bei 175°C lag. Als Laser wurde ein CO2-Laser verwendet, dessen-Leistung 30 Watt und Einwirkdauer (Einwirkdauer 0,12 ms (Scangeschwindigkeit 5000mm/s bei einem Fokusdurchmesser von 600µm) so gewählt wurden, dass die Pulverkörnchen aufzuschmelzen begannen und transparent wurden. Als Resultat waren die mit dem Laser bestrahlten Bereiche an ihrer dunkleren Färbung erkennbar.

Der Hintergrund für die Farbänderung ist der, dass das zunächst teilkristalline Pulver, welches opak ist, aufgrund der Wechselwirkung mit dem Laserstrahl zumindest teilweise in die amorphe Phase übergeht (die Schmelze ist amorph). Durch die transparente Farbe der mit dem Laserbestrahlten Pulverbereiche scheinen nun auch Russpartikel ausgrößerer Tiefe schwarz hindurch, wodurch die bestrahlten Bereiche dunkler sind.

Jeweils nach Belichtung aller dem Querschnitt des herzustellenden Objektes entsprechenden Stellen in einer Schicht mit dem Laser wurde eine Wartezeit von 5 bis 10s eingestellt, innerhalb derer die Quarzstrahlerauf diese Schicht einwirken konnten. Durch die erhöhte Absorption aufgrund der dunkleren Färbung konnten dabei die vorher mit dem Laser bestrahlten Stellen zusätzlich Anteile des Abstrahlspektrums der Quarzstrahler absorbieren. Dadurch nahm in diesen Bereichen die Schmelze eine niedrigere Viskosität an, so dass die Dichte des Materials sich erhöhte, da Poren im Material Gelegenheit hatten, auszuheilen.

Im vorliegenden Beispiel fand bereits eine teilweise Aufschmelzung des Materials durch den Laser statt. Durch die zusätzliche Ausnutzung der von der Strahlungsheizung eingebrachten Energie, konnte jedoch die Einwirkdauer der Laserstrahlung niedrig gehalten werden, was zu einer höheren Geschwindigkeit des Abtastvorgangs mit dem Laser führte. Darüberhinaus ergab sich eine Verbesserung der Homogenität, da die lokal durch den Lasereingebrachte Energie geringer war und dadurch kleinere Temperaturgradienten vorhanden waren.

Schließlich sei noch erwähnt, dass durch die Einbringung von Zusatzstoffen auch bewirkt werden kann, dass durch selektives Bestrahlen mit dem Laser das Absorptionsvermögen des Pulvermaterials erniedrigt wird. Eine nachfolgende Bestrahlung mittels der Strahlungsheizung kann dann so durchgeführt werden, dass genau jene Bereiche einer Schicht verfestigt werden, deren Absorptionsvermögen nicht erniedrigt wurde (inverses Verfestigen).

### 3. Ausführungsbeispiel

Bei dem dritten Ausführungsbeispiel wird als Baumaterial ein Polyaryletherketon-Pulver verwendet. Polyaryletherketone als Baumaterial sind deshalb besonders interessant, weil aus PAEK-Pulver hergestellte Bauteile sich durch eine schwere Entflammbarkeit, eine gute Biokompatibilität sowie eine hohe Hydrolyse- und Strahlenbeständigkeit auszeichnen. Insbesondere die thermische Beständigkeit auch bei erhöhten Temperaturen sowie die chemische Beständigkeit zeichnen PAEK-Pulver gegenüber herkömmlichen Kunststoffpulvern aus. Aufgrund dieser Eigenschaften sind PAEK-Werkstoffe vor allem in der Luft- und Raumfahrt, in der Automobil- und Elektronikindustrie sowie der Medizinindustrie begehrt. Insbesondere kann es sich bei solch einem PAEK-Polymerpulver um ein Pulver aus der Gruppe Polyetheretherketon (PEEK), Polyetherketonketon (PEKK), Polyetherketon (PEK), Polyetheretherketonketon (PEEKK) oder Polyetherketonetherketonketon (PEKEKK) handeln.

Im Hinblick auf das Pulversintern bzw. -schmelzen bringen allerdings PAEK-Pulver den Nachteil mit sich, dass der Schmelzpunkt des Materials oberhalb von 300°C liegt und dadurch besonders hohe Energiemengen durch den Laser eingebracht werden müssen. In diesem Zusammenhang kann das Verfahren der vorliegenden Erfindung zu einer Verbesserung der Qualität der hergestellten Bauteile beitragen: Da ein Teil der für die Pulververfestigung notwendigen Energie durch die Strahlungsheizung bereitgestellt wird, muss durch einen Laser lokal nicht so viel Energie eingebracht werden. Aufgrund der hohen Schmelzviskosität der Polyaryletherketone ermöglicht die Absorption zusätzlicher Energie aus der Heizstrahlung außerdem einen längeren Aufschmelzvorgang der Pulverpartikel. Es findet dadurch eine Glättung des Schmelzefilms statt.

Das Verfahren gemäß dem dritten Ausführungsbeispiel ist sehr ähnlich jenem des ersten und zweiten Ausführungsbeispiels.

Die emittierte Strahlung 18' der verwendeten Heizstrahler weist ein Spektrum im VIS-Bereich (sichtbares Licht) und Infrarotbereich auf, wobei das Emissionsmaximum im nahen Infrarot liegt. Die Leistung der Heizstrahler wurde so eingestellt, dass vor Beginn der Belichtung einer neu aufgetragenen Pulverschicht die Oberflächentemperatur der Pulverschicht bei 335°C lag. Aufgrund der hohen Bauraumtemperatur wurde das Verfahren in einer für diese hohe Temperatur modifizierten Lasersinteranlage vom Typ EOS P700 durchgeführt.

### Beispiel 3a:

Als Baumaterial wurde ein von der Firma Victrex geliefertes PEEK-Pulvermit einer Schmelzviskosität von 0,15 kN*s/m²·verwendet, welches außerhalb der Lasersintervorrichtung einer thermischen Vorbehandlung in einem Umluftofen unterzogen wurde.

Als Laser wurde ein CO2-Laser verwendet, dessen Leistung 19 Watt und Einwirkdauer von 0,27ms (Scangeschwindigkeit 2200mm/s bei einem Fokusdurchmesser von 600µm) so gewählt wurden, dass die Pulverkörnchen angeschmolzen wurden und infolgedessen die mit dem Laser bestrahlten Bereiche sich dunkler verfärbten.

Jeweils nach Belichtung aller dem Querschnitt des herzustellenden Objektes entsprechenden Stellen innerhalb einer Schicht mit dem Laser wurde eine Wartezeit von 12s eingestellt, innerhalb derer die Heizstrahler auf diese Schicht einwirken konnten. Durch die erhöhte Absorption aufgrund der dunkleren Färbung nahm in den mit dem Laser bestrahlten Bereichen die Schmelze eine niedrigere Viskosität an, so dass die Dichte des Materials sich erhöhte, da Poren im Material Gelegenheit hatten, auszuheilen.

### Vergleichsbeispiel 3b

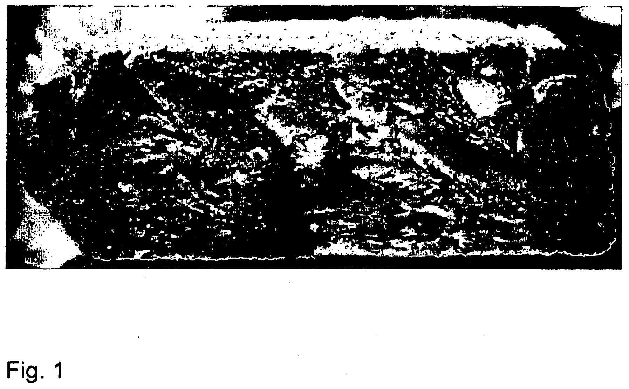

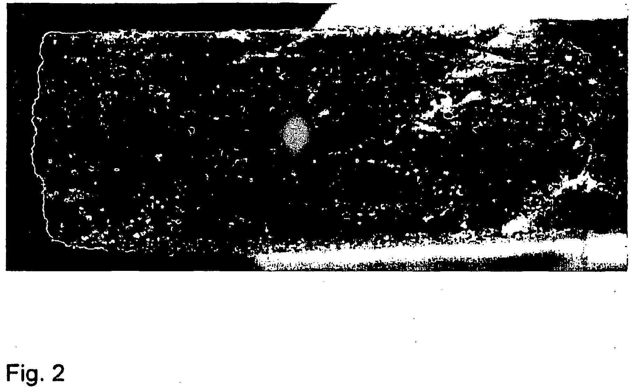

Zum Beleg für die Erhöhung der Dichte des Bauteils durch die Behandlung mit der Strahlungsheizung wurde das obige Beispiel 3a unter Hinweglassung der Einwirkzeit (Nachversinterungszeit) von 12s der Strahlungsheizung wiederholt. Wie auch in obigem Beispiel 3a wurde in jeder Bauraumhälfte ein Probekörper von 150 x 20 x 4 mm (Länge, Breite, Höhe) hergestellt. Dichtemessungen an den abgekühlten Probekörpern zeigten eine Dichte von 1,308 g/cm³ ohne Nachversinterungszeit (Beispiel 3b) und von 1,314 g/cm³ mit 12-sekündiger Nachversinterungszeit (Beispiel 3a). Die Abnahme der Porosität ließ sich auch optisch bei Betrachtung der Bruchfläche eines Bauteils mittels lichtmikroskopischer Aufnahme erkennen (siehe Figur 1 und 2). Ohne Nachversinterungszeit wiesen die Probekörper noch viele Poren auf (Figur 2), während mit einer Nachversinterungszeit annähernd dichte Bauteile erhalten wurden (Figur 1).

Was die Länge der Nachversinterungszeit anbelangt, so ist die Aufschmelzung des Materials umso vollständiger, je länger diese Zeit ist. Sie kann zwischen eins und sechzig Sekunden betragen, sollte dabei aber umso länger gewählt werden, je höher die Schmelzviskosität des verwendeten Polyaryletherketons ist.

### Dies zeigt ein Vergleichsbeispiel 3c:

Bei diesem wurde das Verfahren des Beispiels 3a mit einem ebenfalls von der Firma Victrex bezogenen PEEK-Pulver durchgeführt, dessen Ausgangswert der Schmelzviskosität bei 0,45 kN*s/m² lag. Die thermische Vorbehandlung erfolgte wie in Beispiel 3a ebenfalls in einem Umluftofen. Zur Erzielung einer Bauteildichte von 1,313 g/cm³ war eine Nachversinterungszeit von 15s anstelle von 12s notwendig.

Desweiteren zeigen sich bei zu kurzer Dauer der Nachversinterungszeit oder ohne die Verwendung einer Nachversinterungszeit Unterschiede in der Dichte innerhalb einer Schicht. DerGrund ist der, dass innerhalb einer Schicht die zuerst belichteten Flächen bereits eine Nachversinterung durch die Heizung erfahren, während andere Flächen in dieser Schicht noch vom Laser belichtet werden. Der Vorgang der Nachversinterung dauert bei den zuerst belichteten Flächen dadurch länger, da die Strahlungsheizung bereits während der Belichtung der Schicht mit dem Laser einwirken kann.

Dies wird an folgendem Vergleichsbeispiel 3d ersichtlich: Analog zu Vergleichsbeispiel 3b wurde das PEEK-Pulver ohne Nachversinterungszeit verarbeitet. Es wurden allerdings in jeder Bauraumhälfte zwei anstatt ein Probekörper von 150 x 20 x 4 mm (Länge, Breite, Höhe) hergestellt. Dichtemessungen an den abgekühlten Probekörpern zeigten eine Änderung der Dichte in Abhängigkeit der Belichtungsreihenfolge durch den Laser:

| Probekörper | Dichte [g/cm3] |
|---|---|
| Nr. 1 (in jeder Schicht zuerst belichtet) | 1,312 |
| Nr. 2 (in jeder Schicht zuletzt belichtet) | 1,308 |

Als untere Grenze für die Nachversinterungszeit wird also der Fachmann eine Zeitdauer wählen, ab der an jedem Ort im Baufeld, unabhängig vom Zeitpunkt der Belichtung in der Schicht, ein homogener Schmelzefilm ausgebildet wird und als Resultat daraus überall eine gleich hohe Bauteildichte gewährleistet werden kann.

Es ist allerdings auch eine Obergrenze für die Nachversinterungszeit vorhanden: Wird die Nachversinterungszeit zu lange gewählt, so kann es bei Polyaryletherketonen mit niedriger Schmelzviskosität zu sogenannten Durchsinterungs- bzw. Übersinterungseffekten kommen. Diese liegen vor, wenn die durch die Heizung zusätzlich in die Schmelze eingebrachte Energie bei zu langer Einwirkdauer eine so starke Erwärmung der Schmelze bewirkt, dass auch außerhalb des Bauteils befindliches, loses Pulver aufgeschmolzen werden kann bzw. eine Schmelzeausbreitung über die Bauteilgrenzen hinaus eintreten kann. Das Bauteil wächst dann lokal stark an ("Beulenbildung"), wodurch die Dimensionsstabilität, Detailgenauigkeit und das allgemeine Erscheinungsbild der Bauteile stark beeinträchtigt sind.

Es ist üblich, vor Verwendung eines Baumaterials in einem Rapid Prototyping-Verfahren Vorversuche mit diesem Material durchzuführen, um das Material in seinen Eigenschaften kennen zu lernen. Innerhalb dieserVorversuche kann ebenfalls die optimale Nachversinterungszeit für ein Material ermittelt werden. Dies kann beispielsweise durch optische Begutachtung des Schmelzefilms geschehen. Hierzu wird die Struktur bzw. Textur der Schmelze direkt nach Beendigung des Belichtungsprozesses (Einwirkung des Laserstrahls) verglichen mit der Struktur der Schmelze in Abhängigkeit von der Dauer der Einwirkung der Strahlungsheizung. Die optimale Zeitdauer für die Nachversinterungszeit liegt dann vor, wenn bei Erhöhung dieser Zeit keine relevante Glättung der Schmelzetextur mehr zu beobachten ist. Der Wert für die optimale Zeitdauer kann durch Dichtemessungen überprüft werden.

Als Richtwerte können folgende Nachversinterungszeiten für PAEK-Pulver angesehen werden:

Für ein Polyaryletherketon mit einer Schmelzviskosität, die zwischen 0,05 kN*s/m² und 0,25 kN*s/m² liegt (gemessen in einem Kapillarviskosimeter mit einer Wolframcarbid-Düse von 0,5 x 3,175mm bei 400°C und einer Scherrate von 1000 s⁻¹ nach der Prüfvorschrift TM-VX-12 der Firma Victrex plc; siehe auch US-Patent 2006/0251878 A1): mind. 1 Sekunde, max. 15 Sekunden, ideal 12s.

Für ein Polyaryletherketon mit einer Schmelzviskosität, die zwischen 0,25 kN*s/m² und 0,50 kN*s/m² liegt: mind. 5 Sekunden, max. 25 Sekunden, ideal 15s.

Für ein Polyaryletherketon mit einer Schmelzviskosität, die größer 0,5 kN*s/m² liegt: mind. 10 Sekunden, max. 60 Sekunden, ideal 18s.

Die obigen Ausführungsbeispiele können jeweils auf bekannten Lasersintervorrichtungen durchgeführt werden, die in folgender Weise abgewandelt sind:

Die Vorrichtung enthält eine Ablaufsteuerung (19), die nach jedem Belichtungsvorgang einer Schicht eine Wartezeit einfügt. Vorteilhafterweise sollte dabei die Wartezeit, die für alle Schichten gleich ist, durch den Benutzer einstellbar sein.

Denkbar ist sogar, für unterschiedliche Schichten unterschiedliche Wartezeiten vorzusehen, wodurch Parameterschwankungen begegnet werden kann oder aber gezielt Bauteilparameter variierbar sind.

Vorzugsweise ist die Steuerung der Strahlungsheizung in der Lage, die Heizleistung während der Wartezeit zu erhöhen.

Bei den obigen Ausführungsbeispielen wurden diverse Abänderungsmöglichkeiten des jeweiligen Ausführungsbeipiels beschrieben. Diese Abwandlungen sind nicht auf das zugehörige Ausführungsbeipiel beschränkt. Insbesondere kann die Erfindung noch in folgender Weise abgewandelt werden:

Da beim erfindungsgemäßen Verfahren die Strahlungsheizung nicht nur zur Vorwärmung des Pulvers dient, sondern ebenfalls zur Sinterung/Aufschmelzung, kann abweichend zum Stand der Technik die Regelung der Heizleistung nicht nur lediglich so erfolgen, dass während des Bauvorgangs eine konstante Oberflächentemperatur beibehalten wird. Vielmehr kann während der auf das Belichten erfolgenden Bestrahlungszeit durch die Heizstrahler die Leistung der Heizstrahler gezielt erhöht werden.

Als Strahlungsheizung kann eine Heizung gewählt werden, bei der das Maximum des Spektrums der abgestrahlten Strahlung 18' in einem Wellenlängenbereich von 380nm bis 1000 µm (insbesondere zwischen 1000 und 6000nm) liegt. Es kann beispielsweise eine Flächenheizung gewählt werden. Insbesondere ist auch die Verwendung von Mikrowellenstrahlung (1 mm bis 1 m) möglich.

ln den obigen Ausführungsbeispielen wurde in der Regel eine Erhöhung des Absorptionsvermögens durch Farbänderung beschrieben. Das Absorptionsvermögen kann jedoch auch in anderer Weise erhöhtwerden. Insbesondere kann beispielsweise durch Bestrahlung mit dem Laser die Leitfähigkeit des Materials und daraus resultierend das Absorptionsvermögen für Mikrowellenstrahlung verändert werden.

Obwohl in den Ausführungsformen in der Regel Laser verwendet wurden, können auch andere Strahlungsquellen eingesetzt werden, die in der Lage sind einen fokussierten, gerichteten Strahl auszugeben. Insbesondere können zur Belichtung auch Teilchenstrahlen, wie z.B. Elektronenstrahlen, verwendet werden.

Ferner ist es möglich, als Zusatzstoff Nanopartikel zu dem Pulvermaterial zu geben, die zunächst wegen ihrer geringen Größe nicht die Strahlung der Heizstrahler absorbieren. Hier kann eine Wechselwirkung mit dem Laserlicht zu einem Anschwellen der Nanopartikel führen (z.B. durch Ausgasung niedermolekularer Bestandteile), welche dann aufgrund der Größe der gequollenen Partikel in der Lage sind, die Heizstrahlung zu absorbieren.

Weiterhin ist es auch möglich, nicht beijeder Schicht eine Wartezeit (Nachversinterungszeit) vorzusehen. Dies kann vielmehr nur alle zwei, drei, etc. Schichten geschehen.

### 4. Ausführungsbeispiel

Schließlich ist auch eine Ausführungsform denkbar, bei der die Verfestigung nicht mittels einer Strahlungsheizung erfolgt. Hierbei wird neben der Strahlungsquelle (7), deren gerichteter Strahl auf die Pulveroberfläche gelenkt werden kann, noch eine zweite derartige Strahlungsquelle (70) vorgesehen. Nachdem mittels der Strahlungsquelle (7) zunächst selektiv das Absorptionsvermögen in einer aufgetragenen Pulverschicht erhöht wurde, erfolgt die eigentliche selektive Verfestigung mittels der zweiten Strahlungsquelle (70). Hierzu wird der gerichtete Strahl (80) der zweiten Strahlungsquelle (ein Photonen- oder Teilchenstrahl) nacheinander auf jene Stellen gerichtet, die dem Querschnitt des Objektes in der aufgetragenen Pulverschicht entsprechen und deren Absorptionsvermögen zuvor mit der Strahlungsquelle (7) erhöht wurde.

Der Vorteil der zuletzt genannten Vorgehensweise besteht darin, dass für die Änderung des Absorptionsverhaltens ein Strahl mit sehr kleinem Fokus verwendet werden kann, der die Ausbildung sehr feiner Strukturen an dem zu bildenden Objekt erlaubt. Für die eigentliche Verfestigung kann ein Strahl mit erheblich höherer Leistungsdichte verwendet werden, der nicht so genau fokussiert werden kann und muss. Beispielsweise kann das Ändern des Absorptionsvermögens mit einem kurzwelligen und genau fokussierbaren UV-Laser geschehen und die Verfestigung mit einem langwelligen, energiereichen CO2-Laser. Obwohl der CO2-Laser einen größeren Fokus hat, können trotzdem sehrfeine Strukturen ausgebildet werden, da die Verfestigung nur in den mit großer Auflösung durch den UV-Laservorbehandelten Bereichen stattfindet.

Eine zusätzliche Verfestigung mittels einer Strahlungsheizung kann assistierend stattfinden, ist jedoch in Abhängigkeit vom Pulverausgangsmaterial, nicht zwingend notwendig.

Alle sonstigen bei den anderen Ausführungsbeispielen genannten Abwandlungen sind in gleicher Weise bei der vorliegenden Ausführungsform anwendbar. Insbesondere ist auch ein "inverses Verfestigen", also eine selektives Inhibieren des Aufschmelzens, möglich.

## Patentansprüche

1. Verfahren zur schichtweisen Herstellung eines dreidimensionalen Objektes, welches die Schritte aufweist:
einen ersten Schritt des Bereitstellens einer Schicht eines pulverförmigen Materials auf einem Träger oder einer bereits zuvor an ausgewählten Stellen verfestigten Schicht,
einen zweiten Schritt des selektiven Richtens eines fokussierten Photonen- oder Teilchenstrahls (8') auf ausgewählte Stellen der Schicht,
wobei im zweiten Schritt der Photonen- oder Teilchenstrahl so gewählt wird, dass er bei Auftreffen auf die Schicht eine Änderung des Absorptionsvermögens des Materials hervorruft und
nach Beendigung des zweiten Schrittes ein dritter Schritt durchgeführt wird, bei dem die Schicht mit elektromagnetischer Strahlung (18') dergestalt bestrahlt wird, dass das Material an jenen Stellen der Schicht, welche dem Querschnitt des zu bildenden Objektes entsprechen, komplett aufgeschmolzen wird, wobei das komplette Aufschmelzen im dritten Schritt an jenen Stellen erfolgt, auf die im zweiten Schritt der Photonen- oder Teilchenstrahl (8') gerichtet wurde.

2. Verfahren zur schichtweisen Herstellung eines dreidimensionalen Objektes, welches die Schritte aufweist:
einen ersten Schritt des Bereitstellens einer Schicht eines pulverförmigen Materials auf einem Träger oder einer bereits zuvor an ausgewählten Stellen verfestigten Schicht,
einen zweiten Schritt des selektiven Richtens eines fokussierten Photonen- oder Teilchenstrahls (8') auf ausgewählte Stellen der Schicht,
wobei im zweiten Schritt der Photonen- oder Teilchenstrahl so gewählt wird, dass er bei Auftreffen auf die Schicht eine Änderung des Absorptionsvermögens des Materials hervorruft und
nach Beendigung des zweiten Schrittes ein dritter Schritt durchgeführt wird, bei dem die Schicht mit elektromagnetischer Strahlung (18') dergestalt bestrahlt wird, dass das Material an jenen Stellen der Schicht, welche dem Querschnitt des zu bildenden Objektes entsprechen, homogen verfestigt wird, wobei die Verfestigung im dritten Schritt an jenen Stellen erfolgt, auf die im zweiten Schritt der Photonen- oder Teilchenstrahl (8') nicht gerichtet wurde.

3. Verfahren nach einem der Ansprüche 1 bis 2, bei dem im zweiten Schritt durch den Photonen- oder Teilchenstrahl (8') eine chemische Reaktion im Material angeregt wird.

4. Verfahren nach einem der Ansprüche 1 bis 3, bei dem im zweiten Schritt durch den Photonen- oder Teilchenstrahl (8') ein Phasenübergang im Material angeregt wird.

5. Verfahren nach einem der Ansprüche 1 bis 4, bei dem im zweiten Schritt durch den Photonen- oder Teilchenstrahl (8') eine Dichteänderung des Materials hervorgerufen wird.

6. Verfahren nach einem der Ansprüche 1 bis 5, bei dem dem pulverförmigen Material ein Zusatzstoff zugefügt ist, dessen Absorptionsvermögen im zweiten Schritt verändert wird.

7. Verfahren nach einem der Ansprüche 1 bis 6, bei dem das Maximum der im dritten Schritt verwendeten elektromagnetischen Strahlung (18') im Wellenlängenbereich zwischen 1000 und 6000nm liegt.

8. Verfahren nach einem der Ansprüche 1 bis 7, bei dem für die Bestrahlung der Schicht im dritten Schritt ein zweiter fokussierter Photonen- oder Teilchenstrahl (80) verwendet wird.

9. Verfahren nach einem der Ansprüche 1 bis 8, bei dem als Material ein Thermoplast verwendet wird.

10. Verfahren nach einem der Ansprüche 1 bis 9, bei dem als Material ein Polyaryletherketon (PAEK) -Pulver oder ein Polyaryletherketon(PAEK) /Polyarylethersulfon(PAES) -Copolymer verwendet wird.

11. Vorrichtung zur Herstellung eines dreidimensionalen Objektes durch aufeinanderfolgendes Verfestigen von Schichten eines verfestigbaren, pulverförmigen Materials an den dem Querschnitt des zu bildenden Objektes entsprechenden Stellen mittels Strahlung mit
einem Träger (4) zum Tragen des zu bildenden Objektes mit einer im Wesentlichen ebenen Oberfläche;
einer Auftragvorrichtung (10) zum Aufbringen einer Schicht des Materials auf die Oberfläche des Trägers oder einer bereits zumindest teilweise verfestigten Schicht,
einer Bestrahlungsvorrichtung (7), die in der Lage ist, einen elektromagnetischen Strahl oder Teilchenstrahl (8') selektiv auf die dem Querschnitt des Objektes entsprechenden Stellen der Schicht zu richten oder alternativ auf jene Stellen der Schicht zu richten, die nicht dem Querschnitt des Objektes entsprechen; und
einer Strahlungsheizung (18), welche eine Strahlung (18') mit einem Maximum bei einer Wellenlänge zwischen 1000 und 6000nm zum Beheizen der Pulverschicht aussenden kann, **dadurch gekennzeichnet, dass**
die Vorrichtung eine Ablaufsteuerung (19) aufweist, welche nach Abschluss des selektiven Bestrahlens der Schicht eine Wartezeit zur Verfestigung des Materials einfügt, bevor eine neue Schicht aufgetragen wird, wobei die Wartezeit durch den Benutzer einstellbar ist.

12. Vorrichtung nach Anspruch 11, bei der die Steuereinrichtung während der Wartezeit die Heizleistung der Strahlungsheizung (18) erhöht.

13. Vorrichtung zur Herstellung eines dreidimensionalen Objektes durch aufeinanderfolgendes Verfestigen von Schichten eines verfestigbaren, pulverförmigen Thermoplasten an den dem Querschnitt des zu bildenden Objektes entsprechenden Stellen mittels Strahlung mit
einem Träger (4) zum Tragen des zu bildenden Objektes mit einer im Wesentlichen ebenen Oberfläche;
einer Auftragvorrichtung (10) zum Aufbringen einer Schicht des Materials auf die Oberfläche des Trägers oder einer bereits zumindest teilweise verfestigten Schicht,
einer Bestrahlungsvorrichtung (7), die in der Lage ist, einen ersten elektromagnetischen Strahl oder Teilchenstrahl (8') zur Veränderung des Absorptionsvermögens selektiv auf die Schicht zu richten,
wobei eine zweite Bestrahlungsvorrichtung (70) zum selektiven Richten eines elektromagnetischen Strahls oder Teilchenstrahls (80) auf die Schicht vorgesehen ist, wobei der zweite Strahl (80) eine höhere Leistungsdichte aufweist als der erste Strahl,
**gekennzeichnet durch** eine Steuervorrichtung, die die erste Bestrahlungsvorrichtung (7) so steuert, dass mit dem ersten elektromagnetischen Strahl oder Teilchenstrahl (8') selektiv das Absorptionsvermögens in einer aufgetragenen Schicht erhöht wird und
die die zweite Bestrahlungsvorrichtung (70) so steuert, dass der elektromagnetische Strahl oder Teilchenstrahl (80) auf jene Stellen der Schicht gerichtet wird, die dem Querschnitt des Objektes in der Schicht entsprechen und deren Absorptionsvermögen zuvor mit dem ersten Strahl erhöht wurde,
wobei die Vorrichtung weiterhin eine Strahlungsheizung (18), welche eine Strahlung (18') mit einem Maximum bei einer Wellenlänge zwischen 1000 und 6000nm zum Beheizen der Pulverschicht aussenden kann, und
eine Steuereinrichtung (19) aufweist, welche nach Abschluss des selektiven Bestrahlens der Schicht mit dem zweiten Strahl (80) eine Wartezeit einfügt, bevor eine neue Schicht aufgetragen wird.

## Claims

1. Method for layer-upon-layer production of a three-dimensional object, having the following steps:
a first step of providing a layer of a powdered material on a carrier or a layer which has previously already solidified at selected locations,
a second step of selectively directing a focused photon or particle beam (8') onto selected locations of the layer,
wherein,
in the second step the photon or particle beam is selected such that, on incidence on the layer, it brings about a change in the absorption capability of the material and,
after the second step is completed, a third step is carried out, in which the layer is irradiated with electromagnetic radiation (18') such that the material is completely melted at those locations of the layer that correspond to the cross section of the object to be formed, wherein the complete melting in the third step occurs at those locations onto which, in the second step, the photon or particle beam (8') was directed.

2. Method for layer-upon-layer production of a three-dimensional object, having the following steps:
a first step of providing a layer of a powdered material on a carrier or a layer which has previously already solidified at selected locations,
a second step of selectively directing a focused photon or particle beam (8') onto selected locations of the layer,
wherein,
in the second step the photon or particle beam is selected such that, on incidence on the layer, it brings about a change in the absorption capability of the material and,
after the second step is completed, a third step is carried out, in which the layer is irradiated with electromagnetic radiation (18') such that the material is homogenously solidified at those locations of the layer that correspond to the cross section of the object to be formed, wherein the solidification in the third step occurs at those locations onto which, in the second step, the photon or particle beam (8') was not directed.

3. Method according to either of Claims 1 and 2, in which, in the second step, a chemical reaction is induced in the material by the photon or particle beam (8').

4. Method according to one of Claims 1 to 3, in which, in the second step, a phase transition is induced in the material by the photon or particle beam (8').

5. Method according to one of Claims 1 to 4, in which, in the second step, a change in density of the material is induced by the photon or particle beam (8').

6. Method according to one of Claims 1 to 5, in which an additive, whose absorption capability is changed in the second step, is added to the powdered material.

7. Method according to one of Claims 1 to 6, in which the maximum of the electromagnetic radiation (18') used in the third step is in the wavelength range between 1000 and 6000 nm.

8. Method according to one of Claims 1 to 7, in which a second focused photon or particle beam (80) is used to irradiate the layer in the third step.

9. Method according to one of Claims 1 to 8, in which a thermoplastic is used as the material.

10. Method according to one of Claims 1 to 9, in which a polyaryl ether ketone (PAEK) powder or a polyaryl ether ketone (PAEK) /polyaryl ether sulfone (PAES) copolymer is used as the material.

11. Apparatus for producing a three-dimensional object by successive solidification of layers of a solidifiable, powdered material at those locations that correspond to the cross section of the object to be formed using radiation, comprising
a carrier (4) for carrying the object to be formed with a surface that is substantially planar;
an application apparatus (10) for applying a layer of the material onto the surface of the carrier or a layer which has already at least partially solidified,
an irradiation apparatus (7) capable of directing an electromagnetic beam or particle beam (8') selectively onto those locations of the layer that correspond to the cross section of the object or, alternatively, onto those layers of the layer that do not correspond to the cross section of the object, and
a radiation heater (18), which can emit radiation (18') with a maximum at a wavelength between 1000 and 6000 nm for heating the powder layer, **characterized in that** the apparatus has a process control system (19) which, after the selective irradiation of the layer has been completed, inserts a waiting period for solidification of the material before a new layer is applied, wherein the waiting period can be set by the user.

12. Apparatus according to Claim 11, in which the control device increases the heating output of the radiation heater (18) during the waiting period.

13. Apparatus for producing a three-dimensional object by successive solidification of layers of a solidifiable, powdered thermoplastic at those locations that correspond to the cross section of the object to be formed using radiation, comprising
a carrier (4) for carrying the object to be formed with a surface that is substantially planar;
an application apparatus (10) for applying a layer of the material onto the surface of the carrier or a layer which has already at least partially solidified,
an irradiation apparatus (7) capable of directing a first electromagnetic beam or particle beam (8') selectively onto the layer for changing the absorption capability,
wherein a second irradiation apparatus (70) is provided for selectively directing an electromagnetic beam or particle beam (80) onto the layer, wherein the second beam (80) has a higher power density than the first beam,
**characterized by** a control apparatus which controls the first irradiation apparatus (7) such that the first electromagnetic beam or particle beam (8') is used to selectively increase the absorption capability in an applied layer and
which controls the second irradiation apparatus (70) such that the electromagnetic beam or particle beam (80) is directed onto those locations of the layer that correspond to the cross section of the object in the layer and whose absorption capability was previously increased with the first beam, wherein the apparatus furthermore has a radiation heater (18), which can emit radiation (18') with a maximum at a wavelength between 1000 and 6000 nm for heating the powder layer, and
a control device (19) which, after the selective irradiation of the layer with the second beam (80) has been completed, inserts a waiting period before a new layer is applied.

## Revendications

1. Procédé de fabrication par couches d'un objet tridimensionnel, comportant les étapes suivantes :
une première étape de la préparation d'une couche d'un matériau pulvérulent sur un support ou sur une couche déjà solidifiée précédemment à des emplacements sélectionnés,
une deuxième étape de l'orientation sélective d'un faisceau focalisé de photons ou de particules (8') vers des emplacements sélectionnés de la couche,
dans lequel le faisceau de photons ou de particules est sélectionné dans la deuxième étape de telle sorte que lors de l'impact sur la couche, celui-ci engendre une modification de la capacité d'absorption du matériau et
après l'achèvement de la deuxième étape, on effectue une troisième étape dans laquelle la couche est irradiée par un rayonnement électromagnétique (18') de telle sorte qu'aux emplacements de la couche correspondant à la coupe transversale de l'objet à former, le matériau est totalement fondu, la fusion totale étant réalisée dans la troisième étape aux emplacements sur lesquels le faisceau de photons ou de particules (8') était orienté dans la deuxième étape.

2. Procédé de fabrication par couches d'un objet tridimensionnel, comportant les étapes suivantes :
une première étape de la préparation d'une couche d'un matériau pulvérulent sur un support ou sur une couche déjà solidifiée précédemment à des emplacements sélectionnés,
une deuxième étape de l'orientation sélective d'un faisceau focalisé de photons ou de particules (8') vers des emplacements sélectionnés de la couche,
dans lequel le faisceau de photons ou de particules est sélectionné dans la deuxième étape de telle sorte que lors de l'impact sur la couche, celui-ci engendre une modification de la capacité d'absorption du matériau et
après l'achèvement de la deuxième étape, on effectue une troisième étape dans laquelle la couche est irradiée par un rayonnement électromagnétique (18') de telle sorte qu'aux emplacements de la couche correspondant à la coupe transversale de l'objet à former, le matériau est solidifié de manière homogène, la solidification étant réalisée dans la troisième étape aux emplacements sur lesquels le faisceau de photons ou de particules (8') n'était pas orienté dans la deuxième étape.

3. Procédé selon une des revendications 1 à 2, dans lequel le faisceau de photons ou de particules (8') active une réaction chimique dans le matériau au cours de la deuxième étape.

4. Procédé selon une des revendications 1 à 3, dans lequel le faisceau de photons ou de particules (8') active une transition de phase dans le matériau au cours de la deuxième étape.

5. Procédé selon une des revendications 1 à 4, dans lequel le faisceau de photons ou de particules (8') engendre une modification de densité du matériau au cours de la deuxième étape.

6. Procédé selon une des revendications 1 à 5, dans lequel on ajoute au matériau pulvérulent, un matériau additionnel dont la capacité d'absorption est modifiée au cours de la deuxième étape.

7. Procédé selon une des revendications 1 à 6, dans lequel le maximum du rayonnement électromagnétique (18') utilisé au cours de la troisième étape se situe dans la plage des longueurs d'ondes entre 1000 et 6000 nm.

8. Procédé selon une des revendications 1 à 7, dans lequel on utilise un deuxième faisceau focalisé de photons ou de particules (80) pour l'irradiation de la couche au cours de la troisième étape.

9. Procédé selon une des revendications 1 à 8, dans lequel le matériau utilisé est un thermoplastique.

10. Procédé selon une des revendications 1 à 9, dans lequel le matériau utilisé est une poudre de polyaryléthercétone (PAEK) ou un copolymère de polyaryléthercétone (PAEK) /polyaryléthersulfone (PAES).

11. Dispositif de fabrication d'un objet tridimensionnel par solidification successive au moyen de rayonnement de couches d'un matériau pulvérulent pouvant se solidifier à des emplacements correspondant à la coupe transversale de l'objet à former avec
un support (4) pour supporter l'objet à former au moyen d'une surface essentiellement plane ;
un dispositif d'application (10) pour déposer une couche du matériau à la surface du support ou sur une couche déjà solidifiée au moins partiellement,
un dispositif d'irradiation (7) capable d'orienter sélectivement un faisceau électromagnétique ou un faisceau de particules (8') vers les emplacements de la couche correspondant à la coupe transversale de l'objet ou en alternative de l'orienter vers ceux des emplacements de la couche ne correspondant pas à la coupe transversale de l'objet, et
un chauffage par rayonnement (18) capable d'émettre un rayonnement (18') avec un maximum pour une longueur d'onde située entre 1000 et 6000 nm pour chauffer la couche pulvérulente, **caractérisé en ce que**
le dispositif comporte une commande du déroulement (19) qui insère un temps d'attente pour la solidification du matériau après l'achèvement de l'irradiation sélective de la couche, avant qu'une nouvelle couche soit appliquée, le temps d'attente pouvant être fixé par l'utilisateur.

12. Dispositif selon la revendication 11, dans lequel l'appareillage de commande augmente la puissance de chauffage du chauffage par rayonnement (18) pendant le temps d'attente.

13. Dispositif de fabrication d'un objet tridimensionnel par solidification successive au moyen de rayonnement de couches d'un thermoplastique pulvérulent pouvant se solidifier à des emplacements correspondant à la coupe transversale de l'objet à former avec
un support (4) pour supporter l'objet à former au moyen d'une surface essentiellement plane ;
un dispositif d'application (10) pour déposer une couche du matériau à la surface du support ou sur une couche déjà solidifiée au moins partiellement,
un dispositif d'irradiation (7) capable d'orienter sélectivement un premier faisceau électromagnétique ou un faisceau de particules (8') vers la couche pour la modification de la capacité d'absorption,
dans lequel un deuxième dispositif d'irradiation (70) est prévu pour orienter sélectivement un faisceau électromagnétique ou un faisceau de particules (80) vers la couche, le deuxième faisceau (80) présentant une densité de puissance supérieure à celle du premier faisceau,
**caractérisé par** un dispositif de commande qui commande le premier dispositif d'irradiation (7) de manière à augmenter sélectivement la capacité d'absorption dans une couche appliquée au moyen d'un premier faisceau électromagnétique ou un faisceau de particules (8'), et
qui commande le deuxième dispositif d'irradiation (70) de manière à orienter sélectivement le faisceau électromagnétique ou le faisceau de particules (80) vers les emplacements de la couche correspondant à la coupe transversale de l'objet dans la couche, et dont la capacité d'absorption a été augmentée précédemment au moyen du premier faisceau,
le dispositif comportant de plus un chauffage par rayonnement (18) capable d'émettre un rayonnement (18') avec un maximum pour une longueur d'onde située entre 1000 et 6000 nm pour chauffer la couche pulvérulente, et
comportant un dispositif de commande (19) qui insère un temps d'attente après la fin de l'irradiation sélective de la couche au moyen du deuxième faisceau (80), avant d'appliquer une nouvelle couche.
